# EUROPEAN PATENT SPECIFICATION

(11) **EP 1 530 906 B1**
(45) Date of publication and mention of the grant of the patent: **27.09.2006**
(21) Application number: 03445128.6
(22) Date of filing: 12.11.2003
(51) Int. Cl.: A23G 9/32, A23G 1/00, A23G 3/00

(54) **Chocolate**
Schokolade
Chocolat

(43) Date of publication of application: 18.05.2005
(73) Proprietor: ASM Foods AB, 59529 Mjölby (SE)
(72) Inventor: Larsson, Leif, 595 53 Mjölby (SE)
(74) Representative: Mattsson, Niklas

(56) References cited:
- US-B1- 6 488 971
- TALBOT G: "Chocolate fat bloom - the cause and the cure." INTERNATIONAL FOOD INGREDIENTS 1995 LODERS CROKLAAN, UK, 1995, pages 40-45, XP009030792
- PATENT ABSTRACTS OF JAPAN vol. 1996, no. 11, 29 November 1996 (1996-11-29) & JP 8 168343 A (MEIJI SEIKA KAISHA LTD), 2 July 1996 (1996-07-02)

## Description

### Technical field of the invention

The present invention relates to a process for the manufacture of a chocolate-comprising food product, to the use of a chocolate based on cocoa butter and/or cocoa butter equivalents and to a frozen food product.

### Background art

A primary constituent of chocolate is cocoa butter. This is a fat with a complex behaviour. Six crystal forms of cocoa butter have been identified, designated I, II, III, IV, V and VI, respectively (Wille R.L. and Lutton E.S., Polymorphism of Cocoa Butter, *J. Am. Oil Chem. Soc*. (1966) 43:491). They can also be described in terms of more conventional lipid polymorphs (γ, α, β' and β) (Vaeck S.V., Cocoa Butter and Fat Bloom, *Manuf. Confect.* (1960) 40:35,71). Some characteristics thereof are given in Table 1.

**Table 1**

| Cocoa butter form | Lipid polymorph | Melting point (°C) | X-ray short spacing (Å) |
|---|---|---|---|
| I | γ (sub-α) | 17.3 | 4.19, 3.7 |
| II | α | 23.3 | 4.24 |
| III | β' | 25.5 | 4.25, 3.86 |
| IV | β' | 27.5 | 4.35, 4.15 |
| V | β | 33.8 | 4.58, 3.67 |
| VI | β | 36.3 | 4.58, 3.65 |

Conventional chocolate is produced as form V. This gives the desired stability and the melting and texture properties that a consumer requests when eating a piece of chocolate. A palatable consumer chocolate is solid at room temperature but melts away quickly in the mouth. It has a glossy surface and is resistant to fingerprints.

In conventional chocolate manufacture good tempering is important. The aim of the tempering process is to create as much stable form V crystals as possible. Tempering normally takes the following form: (1) complete melting of the chocolate, (2) cooling to the point of formation of seed crystals, mainly form IV crystals, (3) allowing between 1 and 3 % of the mass to crystallise at this temperature, (4) slight warming to a temperature at which form V crystals will grow, and (5) crystallisation in form V and melting of any remaining form IV crystals. An alternative technique is: (1) complete melting of the chocolate, (2) cooling to the region of growth of form V crystals, (3) addition of seed crystals, and (4) crystallisation.

Conventional form V chocolate is not suitable as an ingredient (e.g. inclusion or coating) in frozen food products, such as ice cream and other frozen desserts. This is because it has a relatively high melting point and so does not melt in the mouth when the mouth is already being chilled by the food. This gives it a hard, dry, waxy and gritty mouthfeel.

Generally, chocolate coatings on ice cream are present in form IV. However, this chocolate is brittle and unstable at ambient temperature and blooms rapidly on removal from the freezer. The brittleness is a serious problem for this kind of product since the coating will snap and pull away from the product. Additionally, form IV chocolate can not be moulded, which restricts its applications.

In order to make palatable chocolate type fillings and coatings for ice cream and other desserts different procedures have been used.

Thus, one method is, e.g., to lower the melting point of chocolate by substituting lower melting triglycerides for part or all of the cocoa butter. Such substitutes comprises, e,.g., butter fat, cocoa butter substitutes (fats based on triglycerides containing mainly lauric acid) and cocoa butter replacers (hydrogenated and fractionated fats based on triglycerides containing mainly C16 and C18 fatty acids). Fats having particular melting properties may also be prepared by trans- or interesterification of triglycerides, such as disclosed in, e.g., US 5,908,654.

Low fat chocolate-like compositions for ice cream or frozen products aiming at creating a softer texture by reducing the amount of fat to melt in the mouth are disclosed in, e.g., US 5,958,476 and US 6,174,555. The disclosed compositions are emulsions comprising fat, water and additives such as thickeners (e.g. gelatins, starches or gums) and emulsifiers (e.g. polyglycerols or monoglycerides).

In US 6,251,448 there are disclosed chocolates and compound coatings including hydrocolloids. Varying the amount of hydrocolloid added to the chocolate or compound coating can lead to a product that has a chewy or slimy texture, without actually melting in the mouth.

However, several national food legislations, as well as the European food legislation (Directive 2000/36/EC), do not allow addition of the abovementioned foreign fats or other ingredients to chocolate. Addition of a maximum of 5 % of another kind of foreign vegetable fat, cocoa butter equivalents, is still allowed according to the legislation. Cocoa butter equivalents are generally cheaper than cocoa butter but has the same melting properties. Thus, the original problem will remain.

### Summary of the invention

As used herein the term "chocolate" means a product obtained substantially from cocoa products and sugars. Cocoa butter equivalents may be added to the chocolate. Also milk chocolate and white chocolate are covered by the term "chocolate". Chocolate with additives such as flavours, nuts or fruits, that do not substantially affect the fat composition of the chocolate itself, is also comprised in the term "chocolate".

As used herein the term "cocoa butter" means the fat obtained from cocoa beans or parts of cocoa beans.

As used herein the term "cocoa butter equivalents" means fats, singly or in blends, complying with the following criteria:
- they are non-lauric vegetable fats, which are rich in symmetrical monounsaturated triglycerides of the type POP, POSt and StOSt (P = palmitic acid, O = oleic acid, St = stearic acid);
- they are miscible in any proportion with cocoa butter, and are compatible with its physical properties (melting point and crystallisation temperature, melting rate).
Examples of ingredients in cocoa butter equivalents are fats from illipe, borneo tallow or tengkawang; palm oil; sal; shea; kokum gurgi; mango kernel; and, as an exception to the above criteria, coconut oil.

One object of the present invention is to provide a frozen food product which comprises a chocolate which gives an improved mouthfeel when eaten in a frozen state, e.g. as part of a frozen food product, for example as inclusions in or coating on an ice cream product, and processes for the manufacture of such a product. The improved mouthfeel comprises such sensory properties as increased softness, improved meltability at the temperature of the mouth and reduced impression of angularity of included chocolate pieces. More precisely an object is to provide processes for the manufacture of a frozen food product which contains the chocolate as inclusions as well as for such a product which is coated by the chocolate.

A second object of the present invention is to provide a frozen food product comprising a chocolate having the previously described properties without departing from legal definitions of chocolate. The most important such definition is the European directive 2000/36/EC relating to cocoa and chocolate products intended for human consumption (see above) which primarily states that foreign fats other than cocoa butter equivalents are not allowed in chocolate.

A further object of the present invention is to provide a frozen food product comprising a chocolate which has the previously described properties and which is stable during storage and during manufacture and storage of the food products in which it is contained.

Still another object of the present invention is to be able to control the melting properties of the chocolate within an interval suitable for different frozen food products, e.g. a lower melting point may be desired for chocolate inclusions in ice cream than for chocolate coating on a cake.

These objects are achieved by a process for the manufacture of a chocolate-comprising food product, which comprises manufacturing a frozen food product, preferably an ice cream, and adding a chocolate during said manufacture, which chocolate is obtained by the following consecutive steps:
(a) heating a chocolate based on cocoa butter and/or cocoa butter equivalents so as to achieve melting thereof,
(b) cooling the melted chocolate so as to achieve crystallisation of the cocoa butter and/or cocoa butter equivalents substantially in form I,
(c) optionally subjecting the chocolate from step (b) to a temperature suitable for crystal rearrangement of the cocoa butter and/or cocoa butter equivalents so as to achieve full or partial rearrangement(s) thereof into form II and/or form III, and
(d) keeping the chocolate resulting from step (b), or step (c) if applied, at such conditions that the crystallisation form(s) achieved in step (b) and/or (c) are substantially maintained;
the addition of the chocolate being made at any one of said steps (a)-(d).

The objects of the present invention are additionally achieved by use of a chocolate based on cocoa butter and/or cocoa butter equivalents, obtainable according to steps (a)-(d) of the abovementioned process, as an ingredient in a frozen food product, preferably an ice cream, and by a frozen food product, preferably an ice cream, which comprises such a chocolate.

The process according to the present invention deviates totally from common chocolate manufacturing and comprises no circumstantial tempering process. The present invention is thus based on the principle of preparing chocolate in one or more crystal form(s) that are unstable at room temperature and fix them at lower temperatures, e.g. below 0 °C, until eating. Said unstable forms have a lower melting point than tempered chocolate and thus contribute to an improved mouthfeel.

The process utilises a chocolate based on cocoa butter and/or cocoa butter equivalents as its primary fat components. Such chocolate is regarded by the consumer to have a high quality and it fulfils the requirements of national and European food legislations allowing only the addition of certain foreign vegetable fats, i.e. cocoa butter equivalents (see above), to chocolate.

Heating of the chocolate to achieve melting serves the purpose of removing any crystals present and preparing the chocolate for crystallisation in the desired form.

Cooling of the melted chocolate induces crystallisation of the cocoa butter and/or cocoa butter equivalents substantially in form I. For example, form I of cocoa butter has a melting point of about 17 °C and thus melts very easily in the mouth, although included in a frozen food product which cools the mouth as well as the chocolate itself.

Subjecting the chocolate in form I to a temperature suitable for crystal rearrangement allows full or partial rearrangement(s) into form II and/or form III. For example, these crystal forms of cocoa butter have melting points of about 23 and 25 °C, respectively (see Table 1), which may be suitable in some applications. The extent of rearrangement determines the melting point of the chocolate. Thus it is generally possible to achieve a desired melting point in the range of from about 17 to about 25 °C and consequently to control the melting properties of the obtained chocolate.

The rearrangement of crystals is an optional step in the process of the invention. By omitting this step a simple and fully satisfactory process is obtained for cases when chocolate having a melting point acquired during the cooling is desired.

Keeping the crystallised chocolate at such conditions that the crystallisation form(s) are substantially maintained is crucial in achieving a stable chocolate product. This step ensures a product which can be stored, distributed and/or used in further manufacturing of food products without being deteriorated.

Preferably, cooling is performed so as to achieve crystallisation of a major part, preferably more than 80 %, more preferably more than 90 %, and most preferably more than 95 %, of the cocoa butter and/or cocoa butter equivalents in form I. Cooling that is aimed at crystallisation in form I is suitably performed at a high rate, preferably faster than about 20 °C/minute. At these conditions formation of crystals of higher melting forms is substantially avoided. By performing the cooling so as to bring the chocolate to a temperature lower than about -10 °C, crystals of form I will readily form.

Different means for performing the cooling step comprise ice and/or water cooling, freezing by liquid or gaseous nitrogen, air cooling and even cooling by means of a product surrounding, or being coated with, the chocolate. Example 6 (see below) shows that deep quenching by liquid nitrogen as well as milder quenching by an ice/water bath lead to direct formation of crystal form I.

Rearrangement among different crystal forms of the cocoa butter and/or cocoa butter equivalents may take place to a smaller or greater extent, depending on the desired melting properties of the chocolate. Rearrangement from form I towards forms II or III results in increasingly higher melting points. If a small increase of melting point is desired, a possible variation of the process is thus to perform the rearrangement so as to achieve full or partial rearrangement into form II only.

Slow rearrangement among crystal forms over long time periods (weeks or months) may occur even below, e.g., 0 °C. To be completed within a practically useful period of time (minutes, hours or days) the rearrangement should preferably take place at a temperature in the range of from about 0 to about 21 °C. Transformation into form II can be performed in the range of from about 0 to about 5 °C, more preferably from about 0 to about 2 °C. Transformation into form III can be performed in the range of from about 0 to about 15 °C, more preferably from about 5 to about 10 °C. Further transformation occurs very easily if the preferred temperature ranges are exceeded.

Slow rearrangement among crystal forms over long time periods (weeks or months) may, as described above, occur even below, e.g., 0 °C. A suggested storage temperature for keeping the crystallised chocolate at such conditions that the crystallisation form(s) are maintained is below -15 °C. At this temperature chocolate prepared according to the process of the invention can be stored for several months substantially without crystal transformations occurring. Lower temperatures allow increased storage times.

Preferred embodiments of the process according to the invention comprises performing the cooling, rearrangement and/or keeping steps after including the chocolate in, or coating the chocolate upon, a frozen food product. Such a procedure is preferred, e.g., when the constitution of the frozen food product does not allow separate obtaining and subsequent addition of the chocolate. For example, if the chocolate is to be used for coating of the frozen food product, it is preferred that the chocolate is liquid during coating.

The frozen food product containing the chocolate prepared by the process of the invention is preferably an ice cream but may well be any other frozen food product, such as a sorbet, mousse, frozen yoghurt, ice milk, dessert, cake, pudding, pie or the like.

### Examples

### Example 1: Crystal forms of quick-frozen chocolate

Drops were manufactured by quick-freezing of melted chocolate or cocoa butter by means of liquid nitrogen at -190 °C. Samples were stored at -190 °C and at room temperature, respectively.

DSC analysis was performed at a rate of 3 °C per minute from -20 to 80 °C. Peak temperatures for the different samples are shown in Table 2.

**Table 2**

| | Onset 1 (°C) | Peak 1 (°C) | Onset 2 (°C) | Peak 2 (°C) |
|---|---|---|---|---|
| Quick-frozen chocolate | | | | |
| - cold (-190 °C) stored | 10.2 | 17.2 | 31.5 | 34.2 |
| - room temperature stored | | | 33.1 | 35.6 |
| Quick-frozen cocoa butter | | | | |
| - cold (-190 °C) stored | 9.1 | 13.7 | 27.9 | 33.7 |
| - room temperature stored | (10.2) | (14.0) | 31.4 | 34.2 |
| Conventionally manufactured | | | | |
| confectionary chocolate | | | 30.8 | 34.3 |
| Values in brackets refer to very small peaks. | | | | |

Thus the presence of an earlier peak is revealed in the frozen samples. This peak refers to the transformation of form I cocoa butter. It shows that this form is present in the sample and transforms to another form. There is a very small peak for the room temperature stored cocoa butter. This suggests that a very small portion of the cocoa butter has remained in an unstable state.

X-ray diffraction short spacing measurements were performed on all samples. On the chocolate samples X-ray lines from sugar were discounted. The samples were kept in a chilled state during measurement in order to reduce any transformations. The cold stored chocolate and cocoa butter had very similar diffraction patterns with peaks around 4.2 Å and possibly a smaller peak at around 3.8 Å. This clearly reveals the presence of form I or II. No other peaks were seen for the cold stored samples so it is clear that there is no significant fraction of any other phase. For the room temperature stored and conventionally manufactured samples more peaks are apparent at around 4.5, 4.1, 3.6 and 3.5 Å. This points to the presence of form V.

### Example 2: Storage of form I chocolate and cocoa butter

Samples of quick-frozen chocolate and cocoa butter according to Example 1 were further examined for storage stability. The samples were stored in chilled containers at -10, -15 and -20 °C, respectively, for 3 months. The samples were analysed by DSC and X-ray diffraction as in Example 1.

DSC results showed that the samples stored at -15 °C and -20 °C, respectively, showed peaks as previously. There was an obvious peak at around 17-18 °C for the chocolate samples and about 14 °C for the cocoa butter sample. This indicates form I. For the samples stored at -10 °C this peak was entirely absent and no information was apparent below about 22 °C. Thus, these samples had transformed to another form.

X-ray diffraction patterns for the samples stored at -15 °C and -20 °C, respectively, showed largish peaks at around 4.2 Å and smaller ones at about 3.8 Å. This suggests a large amount of form I. For the samples stored at -10 °C the peak around 3.8 Å was missing. This suggests that these samples were in form II after storage.

Thus, -15 °C or lower is a safe temperature to store form I chocolate and cocoa butter over a period of 3 months. These products can hence be stored in normal household and commercial freezers.

### Example 3: Melting properties of quick-frozen chocolate

Commercially available dark chocolate and milk chocolate samples were obtained. One set of samples was melted and then rapidly cooled to -10 °C in a rheometer cup. The other set was melted and slowly cooled to 25 °C in a rheometer cup and allowed to equilibrate for 1 hour. Both sets were then heated at 0.5 °C per minute to 60 °C whilst being subjected to an oscillatory stress of 2 Pa at a frequency of 10 Hz. The softening temperatures were determined and the results are shown in Table 3.

**Table 3**

| | Softening temperature (°C) | |
|---|---|---|
| | Rapidly cooled | Slowly cooled |
| Dark chocolate | 28 | 34 |
| Milk chocolate | 26 | 35 |

Thus it is shown that rapidly cooled chocolate has a lower softening temperature. This corresponds to a lower temperature at which melting and breakdown would occur in the mouth.

### Example 4: Manufacture of ice cream

Quick-frozen chocolate drops were manufactured according to Example 1. A traditional full-cream ice with 10 % fat, 34 % dry matter and 100 % overrun was prepared according to standard practice. After ageing of the ice cream mix and incorporation of air, the quick-frozen drops and conventionally prepared chocolate drops, respectively, were added to samples of the ice cream at -4 °C. The mix was then cooled to -20 °C and hardened and stored at that temperature.

### Example 5: Sensory evaluation of ice cream with chocolate inclusions

Full-cream ice was prepared according to Example 4 and stored at -20 °C. A selected and trained panel of 10 persons evaluated the characteristic properties of the products. The descriptive sensory evaluation was preceded by training on the products to be evaluated, compilation of relevant properties to be evaluated and creation of a evaluation scale from 0 to 100. The ice cream was served at -15 °C. The mouthfeel of the chocolate was evaluated according to the properties "angular mouthfeel" and "meltability". The results are shown in Table 4.

**Table 4**

| | Angular mouthfeel | Meltability |
|---|---|---|
| Quick-frozen drops | 9 | 75 |
| Conventional drops | 77 *** | 25 *** |

| | | |
|---|---|---|
| *** indicates 99,9 % significance (Tukey) | | |

Thus, the conventionally manufactured drops had significantly higher angular mouthfeel than the quick-frozen drops. In practise, the quick-frozen drops had no angular mouthfeel. The quick-frozen drops differed significantly and very clearly from conventional drops regarding meltability. The quick-frozen drops had a comparably high meltability.

### Example 6: Manufacture of form II chocolate

Two experimental procedures aimed at making chocolate based on cocoa butter as form II were performed.
A: Samples of chocolate were heated until molten (> 45 °C) and then quenched dropwise in an ice/water bath to 0 °C. Samples were then stored for 1 hour, 1 day or 1 week at this temperature, before being held at -24 °C for long-term storage. No further transformation would occur at this temperature (cf. Example 2).
B: Samples of chocolate were heated until molten (> 45 °C), quenched dropwise in liquid nitrogen and then stored at -24 °C. Samples were warmed up to 0 °C and left at that temperature for 1 hour, 1 day or 1 week.

DSC analysis was performed at a rate of 3 °C per minute from -20 to 70 °C. Transformation temperatures were noted. The 1 hour samples (prepared by method A or B) show a peak at around 16.4 °C. This corresponds to form I. For the samples that were stored longer there is a peak at around 22-23 °C. This corresponds to predominantly form II.

Samples were held at 0 °C during X-ray diffraction analysis. It took approximately 10-15 minutes to investigate a sample. There is a difference between the patterns from the 1 hour samples (prepared by method A or B) and the others. The 1 hour samples have typical form I structures whereas the others have form II.

Example 6 shows that it is possible to manufacture form I as well as form II chocolate both by deep quenching (B) and milder quenching (A). Thus, the method according to the present invention can be used to manufacture form I and form II chocolate in a controlled, predictable manner.

## Claims

1. A process for the manufacture of a chocolate-comprising food product, which comprises manufacturing a frozen food product, preferably an ice cream, and adding a chocolate during said manufacture, which chocolate is obtained by the following consecutive steps:
(a) heating a chocolate based on cocoa butter and/or cocoa butter equivalents so as to achieve melting thereof,
(b) cooling the melted chocolate so as to achieve crystallisation of the cocoa butter and/or cocoa butter equivalents substantially in form I,
(c) optionally subjecting the chocolate from step (b) to a temperature suitable for crystal rearrangement of the cocoa butter and/or cocoa butter equivalents so as to achieve full or partial rearrangement(s) thereof into form II and/or form III, and
(d) keeping the chocolate resulting from step (b), or step (c) if applied, at such conditions that the crystallisation form(s) achieved in step (b) and/or (c) are substantially maintained;
the addition of the chocolate being made at any one of said steps (a)-(d).

2. A process according to claim 1, wherein the cooling is performed so as to achieve crystallisation of a major part, preferably more than 80 %, more preferably more than 90 % and most preferably more than 95 % of the cocoa butter and/or cocoa butter equivalents in form I.

3. A process according to claim 1 or 2, wherein the cooling is performed at a rate faster than about 20 °C/minute.

4. A process according to any one of the preceding claims, wherein the cooling is performed to bring the chocolate to a temperature lower than about -10 °C.

5. A process according to any one of the preceding claims, wherein the cooling is performed by means of air.

6. A process according to any one of the preceding claims, wherein the cooling is performed by means of liquid nitrogen.

7. A process according to any one of the preceding claims, wherein the cooling is performed by means of a product surrounding, or being coated with, the chocolate.

8. A process according to any one of the preceding claims, wherein step (c) is performed so as to achieve full or partial rearrangement into form II.

9. A process according to claim 8, wherein step (c) is performed at a temperature in the range of from about 0 to about 5 °C, preferably from about 0 to about 2 °C.

10. A process according to any one of the preceding claims, wherein step (c) is performed so as to achieve full or partial rearrangement into form III.

11. A process according to claim 10, wherein step (c) is performed at a temperature in the range of from about 0 to about 15 °C, preferably from about 5 to about 10 °C.

12. A process according to any one of the preceding claims, wherein the keeping is performed at a temperature lower than about -15 °C.

13. A process according to any one of the preceding claims, wherein the addition of the chocolate is performed to include the chocolate in the food product.

14. A process according to any one of the preceding claims, wherein the addition of the chocolate is performed to coat the chocolate upon the food product.

15. A process according to any one of the preceding claims, wherein steps (b), (c) and/or (d) are performed after the addition of the chocolate to the food product.

16. Use of a chocolate based on cocoa butter and/or cocoa butter equivalents, wherein the cocoa butter and/or cocoa butter equivalents are present in form I, as an ingredient in a frozen food product, preferably an ice cream.

17. Use according to claim 16, wherein a major part, preferably more than 80 %, more preferably more than 90 % and most preferably more than 95 % of the cocoa butter and/or cocoa butter equivalents are present in form I.

18. Use according to claim 16 or 17, wherein the chocolate is an inclusion within the food product.

19. Use according to any one of claims 16 to 18, wherein the chocolate is a coating upon the food product.

20. A frozen food product, preferably an ice cream, comprising a chocolate based on cocoa butter and/or cocoa butter equivalents, wherein the cocoa butter and/or cocoa butter equivalents are present in form I.

21. A food product according to claim 20, wherein a major part, preferably more than 80 %, more preferably more than 90 % and most preferably more than 95 % of the cocoa butter and/or cocoa butter equivalents are present in form I.

22. A food product according to claim 20 or 21, wherein the chocolate is an inclusion within the same.

23. A food product according to any one of claims 20 to 22, wherein the chocolate is a coating upon the same.

## Patentansprüche

1. Verfahren zur Herstellung eines schokoladeumfassenden Lebensmittelproduktes, welches: Herstellen eines gefrorenen Lebensmittelproduktes, vorzugsweise einer Eiscreme, und Zugeben einer Schokolade während der Herstellung umfasst, welche Schokolade durch die folgenden aufeinanderfolgenden Schritte erhalten wird:
(a) Erhitzen einer Schokolade, basierend auf Kakaobutter und/oder Kakaobutteräquivalenten, um so deren Schmelzen zu erreichen,
(b) Abkühlen der geschmolzenen Schokolade, um so Kristallisation der Kakaobutter und/oder Kakaobutteräquivalente im Wesentlichen in Form I zu erhalten,
(c) optional Unterziehen der Schokolade aus Schritt (b) einer Temperatur, die zur Kristallumlagerung(en) der Kakaobutter und/oder Kakaobutteräquivalenten geeignet ist, um so eine vollständige oder teilweise Umlagerung(en) in Form II und/oder Form III zu erreichen, und
(d) Beibehalten der Schokolade, die aus Schritt (b), oder Schritt (c) resultiert, wenn aufgetragen, bei derartigen Bedingungen, dass die Kristallisationsform(en), die in Schritt (b) und/oder (c) erreicht wurden, im Wesentlichen beibehalten werden;
wobei die Zugabe der Schokolade bei irgendeinem der Schritte (a) - (d) durchgeführt wird.

2. Verfahren gemäß Anspruch 1, wobei das Abkühlen so durchgeführt wird, um eine Kristallisation eines Hauptteils, vorzugsweise mehr als 80 %, weiter bevorzugt mehr als 90 %, und insbesondere bevorzugt mehr als 95 % der Kakaobutter und/oder Kakaobutteräquivalenten in Form I zu erreichen.

3. Verfahren gemäß Anspruch 1 oder 2, wobei das Abkühlen bei einer Rate durchgeführt wird, die schneller als ungefähr 20°C/Minute ist.

4. Verfahren gemäß einem der vorhergehenden Ansprüche, wobei das Abkühlen durchgeführt wird, um die Schokolode auf eine Temperatur zu bringen, die niedriger als ungefähr -10°C ist.

5. Verfahren gemäß einem der vorhergehenden Ansprüche, wobei das Abkühlen mittels Luft durchgeführt wird.

6. Verfahren gemäß einem der vorhergehenden Ansprüche, wobei das Abkühlen mittels flüssigem Stickstoff durchgeführt wird.

7. Verfahren gemäß einem der vorhergehenden Ansprüche, wobei das Abkühlen mittels eines Produktes umgebend, oder beschichtet mit, der Schokolade durchgeführt wird.

8. Verfahren gemäß einem der vorhergehenden Ansprüche, wobei Schritt (c) durchgeführt wird, um so eine vollständige oder teilweise Umlagerung in Form II zu erhalten.

9. Verfahren gemäß Anspruch 8, wobei Schritt (c) bei einer Temperatur in dem Bereich von ungefähr 0 bis ungefähr 5°C, vorzugsweise von ungefähr 0 bis ungefähr 2°C, durchgeführt wird.

10. Verfahren gemäß einem der vorhergehenden Ansprüche, wobei Schritt (c) durchgeführt wird, um so eine vollständige oder teilweise Umlagerung in Form III zu erreichen.

11. Verfahren gemäß Anspruch 10, wobei Schritt (c) bei einer Temperatur in dem Bereich von ungefähr 0 bis ungefähr 15°C, vorzugsweise von ungefähr 5 bis 10°C durchgeführt wird.

12. Verfahren gemäß einem der vorhergehenden Ansprüche, wobei das Beibehalten bei einer Temperatur durchgeführt wird, die niedriger als -15°C ist.

13. Verfahren gemäß einem der vorhergehenden Ansprüche, wobei die Zugabe der Schokolade durchgeführt wird, um die Schokolade in dem Lebensmittelprodukt einzuschließen.

14. Verfahren gemäß einem der vorhergehenden Ansprüche, wobei die Zugabe der Schokolade durchgeführt wird, um die Schokolade auf das Lebensmittelprodukt zu beschichten.

15. Verfahren gemäß einem der vorhergehenden Ansprüche, wobei Schritt (b), (c) und/oder (d) nach der Zugabe der Schokolade auf das Lebensmittelprodukt durchgeführt werden.

16. Verwendung einer Schokolade, basierend auf Kakaobutter und/oder Kakaobutteräquivalente, wobei die Kakaobutter und/oder Kakaobutteräquivalente in Form I als ein Inhaltsstoff in einem gefrorenen Lebensmittelprodukt, vorzugsweise einer Eiscreme vorhanden sind.

17. Verwendung gemäß Anspruch 16, wobei ein Hauptteil, vorzugsweise mehr als 80 %, weiter bevorzugt mehr als 90 % und insbesondere bevorzugt mehr als 95 % der Kakaobutter und/oder Kakaobutteräquivalente in der Form I vorhanden sind.

18. Verwendung gemäß Anspruch 16 oder 17, wobei die Schokolade ein Einschluss innerhalb des Lebensmittelproduktes ist.

19. Verwendung gemäß einem der Ansprüche 16 bis 18, wobei die Schokolade eine Beschichtung auf dem Lebensmittelprodukt ist.

20. Gefrorenes Lebensmittelprodukt, vorzugsweise eine Eiscreme, die eine Schokolade umfasst, die auf Kakaobutter und/oder Kakaobutteräquivalenten basiert, wobei die Kakaobutter und/oder Kakaobutteräquivalente in der Form I vorhanden sind.

21. Lebensmittelprodukt gemäß Anspruch 20, wobei ein Hauptteil, vorzugsweise mehr als 80 %, weiter bevorzugt mehr als 90 % und insbesondere bevorzugt mehr als 95 % der Kakaobutter und/oder Kakaobutteräquivalente in der Form I vorhanden sind.

22. Lebensmittelprodukt gemäß Anspruch 20 oder 21, wobei die Schokolade ein Einschluss innerhalb derselben ist.

23. Lebensmittelprodukt gemäß einem der Ansprüche 20 bis 22, wobei die Schokolade eine Beschichtung auf derselben ist.

## Revendications

1. Procédé de fabrication d'un produit alimentaire comprenant du chocolat, qui comprend la fabrication d'un produit alimentaire congelé, de préférence une crème glacée, et l'addition d'un chocolat pendant ladite fabrication, lequel chocolat est obtenu par les étapes consécutives suivantes consistant à :
(a) chauffer un chocolat à base de beurre de cacao et/ou d'équivalents de beurre de cacao de façon à atteindre une fusion de celui-ci,
(b) refroidir le chocolat fondu de façon à atteindre une cristallisation du beurre de cacao et/ou des équivalents de beurre de cacao sensiblement sous forme I,
(c) soumettre facultativement le chocolat provenant de l'étape (b) à une température appropriée pour un réarrangement cristallin du beurre de cacao et/ou des équivalents de beurre de cacao de façon à atteindre un (des) réarrangement(s) complet(s) ou partiel(s) de celui-ci (ceux-ci) sous forme II et/ou sous forme III, et
(d) maintenir le chocolat résultant de l'étape (b), ou de l'étape (c) si elle est appliquée, à des conditions telles que la (les) forme(s) de cristallisation atteinte(s) dans l'étape (b) et/ou (c) est (sont) sensiblement conservée(s) ;
l'addition du chocolat étant effectuée à l'une quelconque desdites étapes (a) à (d).

2. Procédé selon la revendication 1, dans lequel le refroidissement est effectué de façon à atteindre une cristallisation d'une majeure partie, de préférence plus de 80 %, de manière davantage préférée plus de 90 % et de manière préférée entre toutes plus de 95 % du beurre de cacao et/ou des équivalents de beurre de cacao sous forme I.

3. Procédé selon la revendication 1 ou 2, dans lequel le refroidissement est effectué à une vitesse plus rapide qu'environ 20 °C/minute.

4. Procédé selon l'une quelconque des revendications précédentes, dans lequel le refroidissement est effectué pour amener le chocolat à une température inférieure à environ -10 °C.

5. Procédé selon l'une quelconque des revendications précédentes, dans lequel le refroidissement est effectué au moyen d'air.

6. Procédé selon l'une quelconque des revendications précédentes, dans lequel le refroidissement est effectué au moyen d'azote liquide.

7. Procédé selon l'une quelconque des revendications précédentes, dans lequel le refroidissement est effectué au moyen d'un produit entourant, ou étant revêtu par, le chocolat.

8. Procédé selon l'une quelconque des revendications précédentes, dans lequel l'étape (c) est effectuée de façon à atteindre un réarrangement complet ou partiel en forme II.

9. Procédé selon la revendication 8, dans lequel l'étape (c) est effectuée à une température dans la gamme d'environ 0 à environ 5 °C, de préférence d'environ 0 à environ 2 °C.

10. Procédé selon l'une quelconque des revendications précédentes, dans lequel l'étape (c) est effectuée de façon à atteindre un réarrangement complet ou partiel en forme III.

11. Procédé selon la revendication 10, dans lequel l'étape (c) est effectuée à une température dans la gamme d'environ 0 à environ 15 °C, de préférence d'environ 5 à environ 10°C.

12. Procédé selon l'une quelconque des revendications précédentes, dans lequel le maintien est effectué à une température inférieure à environ -15 °C.

13. Procédé selon l'une quelconque des revendications précédentes, dans lequel l'addition du chocolat est effectuée pour inclure le chocolat dans le produit alimentaire.

14. Procédé selon l'une quelconque des revendications précédentes, dans lequel l'addition du chocolat est effectuée pour revêtir le chocolat sur le produit alimentaire.

15. Procédé selon l'une quelconque des revendications précédentes, dans lequel les étapes (b), (c) et/ou (d) sont effectuées après l'addition du chocolat au produit alimentaire.

16. Utilisation d'un chocolat à base de beurre de cacao et/ou d'équivalents de beurre de cacao, dans laquelle le beurre de cacao et/ou les équivalents de beurre de cacao sont présents sous forme I, en tant qu'ingrédient dans un produit alimentaire congelé, de préférence une crème glacée.

17. Utilisation selon la revendication 16, dans laquelle une majeure partie, de préférence plus de 80 %, de manière davantage préférée plus de 90 % et de manière préférée entre toutes plus de 95 %, du beurre de cacao et/ou des équivalents de beurre de cacao est présente sous forme I.

18. Utilisation selon la revendication 16 ou 17, dans laquelle le chocolat est une inclusion au sein du produit alimentaire.

19. Utilisation selon l'une quelconque des revendications 16 à 18, dans laquelle le chocolat est un revêtement sur le produit alimentaire.

20. Produit alimentaire congelé, de préférence une crème glacée, comprenant un chocolat à base de beurre de cacao et/ou d'équivalents de beurre de cacao, dans lequel le beurre de cacao et/ou les équivalents de beurre de cacao sont présents sous forme I.

21. Produit alimentaire selon la revendication 20, dans lequel une majeure partie, de préférence plus de 80 %, de manière davantage préférée de plus de 90 % et de manière préférée entre toutes plus de 95 % du beurre de cacao et/ou des équivalents de beurre de cacao est présente sous forme I.

22. Produit alimentaire selon la revendication 20 ou 21, dans lequel le chocolat est une inclusion au sein de celui-ci.

23. Produit alimentaire selon l'une quelconque des revendications 20 à 22, dans lequel le chocolat est un revêtement sur celui-ci.
